# EUROPÄISCHE PATENTSCHRIFT

(11) **EP 2 245 347 B1**
(45) Veröffentlichungstag und Bekanntmachung des Hinweises auf die Patenterteilung: **15.08.2012**
(21) Anmeldenummer: 09704740.1
(22) Anmeldetag: 19.01.2009
(51) Int. Cl.: F16K 11/078

(54) **KARTUSCHE**
CARTRIDGE
CARTOUCHE

(30) Priorität: 21.01.2008 DE 102008000109
(43) Veröffentlichungstag der Anmeldung: 03.11.2010
(73) Patentinhaber: CeramTec GmbH, 73207 Plochingen (DE)
(72) Erfinder: LEINEN, Josef, 54516 Wittlich (DE)
(74) Vertreter: Uppena, Franz
(86) Internationale Anmeldenummer: PCT/EP2009/050549
(87) Internationale Veröffentlichungsnummer: WO 2009/092688

(56) Entgegenhaltungen:
- EP-A- 0 641 963
- EP-A- 1 837 568
- DE-A1- 3 000 631
- DE-A1-102004 056 568
- DE-U1- 8 907 729

## Beschreibung

Die Erfindung betrifft eine Kartusche einer Sanitärarmatur unit einem gehänse , wobei das zylindrisch geformte Gehäuse der Kartusche, das von einer Bodenplatte verschlossen wird, von unten nach oben angeordnet umschließt: eine Ventilsitzscheibe mit Einlassöffnungen für Kalt- und Heißwasser und eine Ausströmöffnung, die in den Ausfluss der Sanitärarmatur mündet, eine zur Ventilsitzscheibe verschiebbar angeordnete Steuerscheibe, die eine Mischkammer enthält, die die Einlassöffnungen und die Ausströmöffnung der Ventilsitzscheibe in Verbindung bringt und in der die Mischung des heißen mit dem kalten Wasser erfolgt sowie eine Abdeckscheibe, die auf der der Ventilsitzscheibe abgewandten Seite der Steuerscheibe mit dieser verbunden ist und mit einem Stellhebel zum Verschieben der Scheiben in Wirkverbindung steht, wobei der Stellhebel in einer Buchse gelagert ist und mit dem Betätigungshebel der Armatur bewegt wird.

An eine Kartusche für eine Sanitärarmatur werden hohe Anforderungen gestellt. Sie soll über einen langen Zeitraum dicht bleiben. Sie soll sich leicht betätigen lassen und bei derselben Ventilstellung möglichst stets Wasser mit derselben Temperatur liefern. Sie soll sich rationell und kostengünstig herstellen lassen und die Anzahl der Verschleißteile soll möglichst gering sein.

Die durch Verschleiß beanspruchten Bauteile einer Kartusche sind der Stellhebel und die mit ihm verbundenen und betätigten Bauteile wie die Buchse, in der er gelagert ist, sowie die mit der Abdeckscheibe verbundene Steuerscheibe.

Bei vertikaler Betätigung des mit dem Stellhebel verbundenen Betätigungshebels der Armatur werden die Zuflüsse geöffnet oder geschlossen, beim Schwenken in horizontaler Richtung werden der Heiß- und der Kaltwasserstrom miteinander gemischt. Bei der Mischung des Heiß- und des Kaltwasserstroms dreht sich die Buchse, in der der Stellhebel gelagert und an der die Steuerscheibe über die Abdeckscheibe befestigt ist, in dem sie umschließenden Gehäuse der Kartusche.

Die Buchse als Lager des Stellhebels liegt an der Stirnwand der zylindrisch geformten Kartusche an. Nach dem Stand der Technik, wie er beispielsweise aus der DE 102004056568 A1 bekannt ist, kann die Buchse zwei rechtwinklig zueinander angeordnete Anlageflächen an dem Gehäuse haben. Mit ihrer der Steuerscheibe abgewandten Seite liegt die Abdeckscheibe an der Stirnwand des Gehäuses der zylindrisch geformten Kartusche an und hat dadurch eine horizontale Anlagefläche. Weil der Stellhebel außerhalb des Gehäuses der Kartusche angeordnet ist, durchstößt die Buchse das Gehäuse. Das Gehäuse hat in der Regel an dieser Stelle einen vertikalen Ansatz, der die Buchse umschließt. Dadurch kann dort die Buchse ebenfalls eine vertikale Anlagefläche am Gehäuse aufweisen.

Das Gehäuse der Kartusche hat eine vorgegebene Einbauhöhe. Diese wird beim Zusammenbau der Kartusche, bei der Verbindung des Gehäuses mit der Grundplatte, erreicht. Damit die Dichtelemente zwischen den einzelnen Bauteilen wirken können, muss das Gehäuse in Axialrichtung unter einer bestimmten Vorspannung stehen. Auf Grund von Toleranzen und voneinander abweichender Flexibilität der Dichtelemente können diese Kräfte bei den einzelnen Kartuschen unterschiedlich groß sein.

Beim Betätigen des Stellhebels zum Öffnen und Schließen der Zu- und Abläufe wird die Buchse und dadurch bedingt auch der Ansatz des Gehäuses und deren Stirnwand auf Biegung beansprucht. Beim Mischen des Kalt- und Warmwasserstroms entstehen durch Drehen der Buchse Reibungskräfte in aufeinander senkrecht stehenden Richtungen zwischen der Buchse und der Stirnwand des Gehäuses sowie im Ansatz des Gehäuses. Insbesondere dann, wenn der Stellhebel nicht in einem vertikalen Ansatz des Gehäuses gelagert ist, kann ein Spiel in der horizontalen Ebene gegenüber der Stirnwand des Gehäuses entstehen. Weil die Misch- und Öffnungsbewegungen des Stellhebels in der Regel gleichzeitig ablaufen, entstehen rechtwinklig aufeinander stehende Zug- und Druckkräfte im Gehäuse.

All diese Belastungen können durch Toleranzen und Spiel zwischen den einzelnen Bauteilen bedingt zu Hysteresen in den Mischstellungen und in der Stellung der Steuerscheibe bei den Öffnungs- und Schließbewegungen führen. Dadurch ist die Reproduktion eines bestimmten Wasserflusses mit einer bestimmten Mischtemperatur bei einer von gegensätzlichen Seiten angefahrenen Position der Steuerscheibe nicht gewährleistet. Außerdem besteht die Gefahr, dass die Kartusche bei Abnutzung und Verhärtung der Dichtelemente undicht wird.

Es ist deshalb die Aufgabe der Erfindung, eine konstruktiv einfache Lagerung der Buchse mit dem in ihr gelagerten Stellhebel im Gehäuse vorzustellen.

Die Lösung der Aufgabe erfolgt mit Hilfe der Merkmale des ersten Anspruchs. Weitere vorteilhafte Ausgestaltungen der Erfindung werden in den abhängigen Ansprüchen beansprucht.

Erfindungsgemäß weist die Buchse mit dem in ihr gelagerten Stellhebel eine konische Lagerfläche auf, die an einer Lagerfläche mit gleichem Winkel an der Stirnwand des Gehäuses anliegt. Damit entfällt eine ansonsten horizontale und gegebenenfalls zusätzliche vertikale Lagerfläche in der Gehäusestirnwand. Insbesondere zwei Lagerflächen führen zu erhöhten Reibungswiderständen. Die sowohl horizontal als auch vertikal wirkenden Kräfte, also die in Quer- und Längsrichtung der Kartusche wirkenden Kräfte, die zu Biegekräften an horizontalen oder vertikalen Lagerflächen führen würden, werden zu einer resultierenden Kraft zusammengefasst und wirken nur noch auf eine Lagerfläche. Bei den gleichzeitigen Schwenk- und Kippbewegungen des Stellhebels ist die Krafteinleitung in das Gehäuse wesentlich günstiger als bei einer herkömmlichen Lagerung der Kartusche.

Durch die konische Form erfolgt unter allen Belastungen, sowohl bei denen, die beim Betätigen als auch bei denen, die durch unterschiedliche Vorspannungen beim Zusammenbau des Gehäuses entstehen, eine Selbstzentrierung, bei der jedes Spiel in der Lagerung unterdrückt wird. Dadurch werden Hysteresen bei der Verstellung der Steuerscheibe verhindert, wodurch bei identischer Stellung des Stellhebels eine reproduzierbare Durchflussmenge und eine reproduzierbare Mischungstemperatur des Wassers gewährleistet werden.

Eine möglichst gleichmäßige Kraftverteilung ist dann gegeben, wenn die konische Lagerfläche auf der Stirnseite des Gehäuses zu der herkömmlichen Lagerfläche, die senkrecht zur Schwenkachse der Buchse steht, einen Winkel von 45 Winkelgraden einschließt. Der Konuswinkel der Lagerfläche beträgt damit 90 Grad. Für eine konische Lagerfläche ist ein Konuswinkel zwischen etwa 80 und 120 Winkelgraden vorteilhaft. Bei Winkeln darunter bzw. darüber wird das Gehäuse wieder zunehmend in radialer Richtung bzw. in Längsrichtung belastet.

Kartuschen sollten für mindestens 100000 Betätigungen ohne Verschleißerscheinungen, insbesondere Undichtigkeiten, ausgelegt sein. Bei hochwertigen Armaturen wird eine Auslegung auf 500000 Betätigungen angestrebt. Die Buchse mit dem in ihr gelagerten Stellhebel ist das mit am meisten beanspruchte Bauteil. Aus diesem Grund ist die Wahl der Werkstoffe für die Buchse und das Gehäuse als Lager wichtig. Für die Buchse und das Gehäuse als Gleitpartner ist Polyoxymethylen (POM) empfehlenswert. Eine Werkstoffpaarung aus Polyamid und POM ist ebenfalls denkbar. Das Polyamid kann zusätzlich durch hochfeste Fasern, beispielsweise Glasfasern, verstärkt sein kann.

Um die Reibung zwischen der Buchse und dem Gehäuse als Lager herabzusetzen, ist eine Schmierung mit geeignetem Kunststofffett vorgesehen, beispielsweise einem Silikonfett mit Teflonpartikeln. Die Speicherung des Fetts erfolgt in Fettkammern, die auf den Lagerflächen vorgesehen sind, auf den sich gegeneinander bewegenden Berührungsflächen der Buchse und des Gehäuses. Die Fettkammern sind in der Regel nur auf einer der Lagerflächen vorgesehen, entweder auf den Lagerflächen der Buchse oder auf den Lagerflächen des Gehäuses. Die Fettkammern bestehen aus kleinen Vertiefungen. Zur gleichmäßigen Versorgung mit Schmiermitteln ist es vorteilhaft, wenn die Fettkammern gleichmäßig auf der entsprechenden Lagerfläche angeordnet sind. Die Fettkammern können von 1 mm bis zu wenige zehntel Millimeter tief und mehrere Millimeter breit und lang sein, beispielsweise 5/10 mm tief mit einer Oberfläche von 1 mm zu 3 mm. Ein kreisförmiger Querschnitt mit wenigen Millimetern Durchmesser, beispielsweise 2 mm bis 3 mm, ist ebenfalls möglich.

An Hand eines Ausführungsbeispiels wird die Erfindung näher erläutert. Es zeigen:
- Figur 1: eine Ansicht des Schnitts durch die Kartusche in symmetrischer Schließstellung,
- Figur 2: eine Ansicht des Schnitts durch das Gehäuse,
- Figur 3: eine Ansicht des Gehäuses in Richtung der konischen Lagerfläche,
- Figur 4: eine Seitenansicht der Buchse und
- Figur 5: eine Ansicht der Buchse mit Blick auf seine Oberseite.

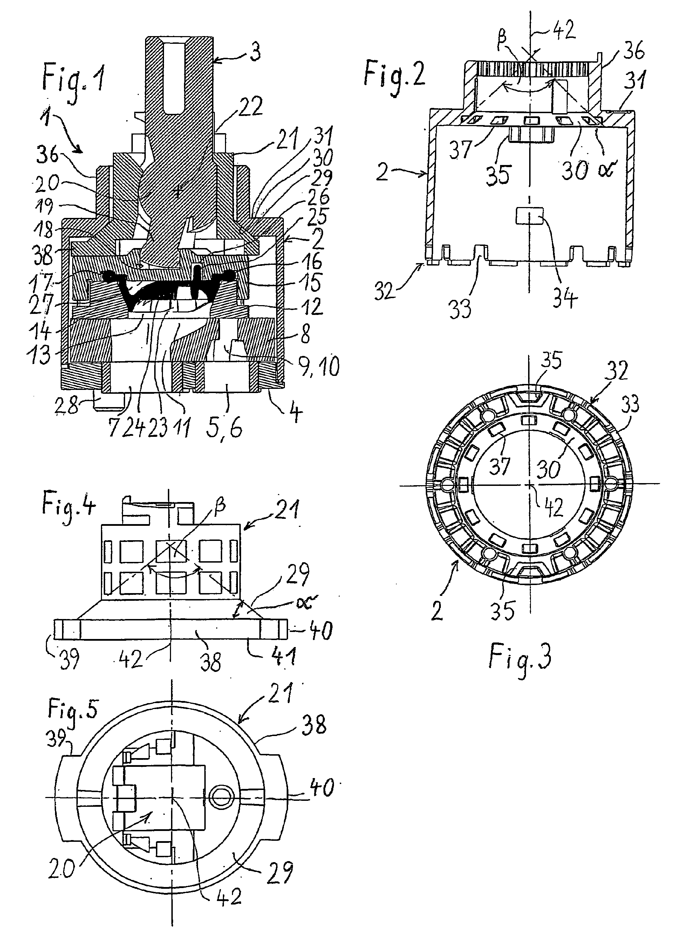

In Figur 1 ist eine Aufsicht auf die Kartusche 1 in Schließstellung im Schnitt dargestellt. Das Gehäuse 2, aus dem der Stellhebel 3 zur Betätigung der Steuerscheibe herausragt, wird auf der Unterseite durch eine Bodenplatte 4 mit den Anschlussöffnungen 5 und 6 für das kalte bzw. heiße Wasser und der Anschlussöffnung 7 für das abströmende Mischwasser abgeschlossen. Der Schnitt verläuft mittig durch die Anschlussöffnung 7 für das abströmende Mischwasser und knickt im Mittelpunkt des Stellhebels 3 ab, um ab da mittig durch die in Blickrichtung hinten liegende Anschlussöffnung 6 zu verlaufen.

Über der Bodenplatte 4 liegt die Ventilsitzscheibe 8, von der die Einlassöffnungen 9 bzw. 10 und die Ausströmöffnung 11 mit den Öffnungen 5 bzw. 6 und 7 der Bodenplatte 4 korrespondierenden.

Über der Ventilsitzscheibe 8 liegt verschiebbar die Steuerscheibe 12, hier in Schließstellung. Sie verschließt die Einlassöffnungen 9 und 10. Die Steuerscheibe 12 weist mittig einen kreisförmigen Durchbruch 13 auf, in den ein Körper 14 zur Verhinderung oder Dämpfung der Fließgeräusche eingesetzt ist. Im vorliegenden Ausführungsbeispiel besteht er aus einem Elastomer. Darüber liegt die Abdeckscheibe 15. Zur Abdichtung des Durchbruchs 13 überdeckt der Körper 14 die Steuerscheibe 12 mit einem ringförmigen Wulst 16 als Dichtelement, der in eine entsprechend geformte Nut 17 der Abdeckscheibe 15 gelagert ist.

In eine Nut oder Vertiefung 18 der Mitnehmer- oder Abdeckscheibe 15 greift der Mitnehmerzapfen 19 des Stellhebels 3 ein. Der Stellhebel 3 ist mit einem zylinderförmigen Schwenklager 20, in einer Buchse 21 gelagert, die von dem Gehäuse 2 umschlossen wird. Die Schwenkachse 22 steht senkrecht zur Längsachse des Stellhebels 3.

Der Körper 14 zur Verhinderung oder Dämpfung der Fließgeräusche füllt den Durchbruch 13 der Steuerscheibe 12 aus und überwölbt die Mischkammer 23 hohlkugelförmig. Parallel verlaufende Rippen 24 bewirken die Geräuschdämpfung. Der Körper 14 trägt auf seiner der Mischkammer 23 abgewandten Seite einen Steg oder Zapfen 25, der zur Zentrierung in eine entsprechen geformte Nut oder Vertiefung 26 der Abdeckscheibe15 hineinreicht.

Oberhalb des Körpers 14, zwischen der Abdeckscheibe 15 und dem Körper 14, hier im Bereich der Ausströmöffnung 11, ist im vorliegenden Ausführungsbeispiel ein Hohlraum 27 zu sehen, der ein Luftpolster enthält. Durch die Elastizität des Körpers 14 kann bei auftretenden Druckschwankungen der Körper 14 in diesen Raum 27 nachgeben und die auftretenden Druckstöße dämpfen.

Die Zapfen 28 dienen der Zentrierung und Befestigung in der Armatur.

In Figur 2 ist ein Vertikalschnitt durch das Gehäuse 2 und in Figur 3 ist eine Innenansicht des Gehäuses mit Blickrichtung auf die Lagerfläche 30 dargestellt. Die Buchse 21 mit dem in ihr gelagerten Stellhebel 3 stützt sich erfindungsgemäß mit einer konisch geformten Fläche 29 auf einen ebenfalls konisch geformten Teil 30 der zylindrisch geformten Stirnwand 31 des Gehäuses 2 ab. Diese Fläche dient als Lagerfläche der Buchse 21 bei der Betätigung der Steuerscheibe 12 für die Mischung des Heiß- und Kaltwasserstroms.

Die Buchse 21 ist um die Achse 42 in dem Gehäuse 2 schwenkbar. Im vorliegenden Ausführungsbeispiel beträgt der Winkel α zwischen der Stirnwand 31 des Gehäuses, die senkrecht zur Achse 42 steht, und der Lagerfläche 29 der Buchse 21 sowie der Lagerfläche 30 des Gehäuses 2 40 Winkelgrade (siehe Figuren 2 und 4). Der Konuswinkel β beträgt damit 100 Winkelgrade.

Der untere Rand 32 des Gehäuses 2 hat Ausnehmungen 33, die den positionsgenauen Zusammenbau mit der Bodenplatte 4 ermöglichen. Öffnungen 34 dienen als Halt der hier nicht dargestellten Widerhaken der Bodenplatte beim Zusammenbau. Sich gegenüberliegende Anschläge 35 begrenzen die Schwenkbewegung der Buchse 21. Das Gehäuse 2 hat an seiner Stirnseite 31 einen zylindrischen Ansatz 36, in die die Buchse 21 mit dem Schwenklager 20 des Stellhebels 3 hineinragt.

Zur Herabsetzung der Reibung zwischen den Lagerflächen sind entweder auf der Lagerfläche 29 der Buchse 21 oder, wie hier vorgesehen, auf der Lagerfläche 30 des Gehäuses 2 Fettkammern 37 vorgesehen. Die Größe, die Form und die Anzahl der Fettkammern richten sich nach der Größe der Lagerfläche, nach ihrer Länge und nach ihrer Breite. Es ist eine solche Verteilung der Fettkammern auf der Fläche vorzusehen, dass eine gleichmäßige Versorgung mit Schmiermittel sichergestellt ist. Die Fettkammern können von 1 mm bis wenige 10tel mm tief sein und einen angepassten Querschnitt von maximal etwa 2 mm bis 3 mm haben. Auch ein runder Querschnitt der Fettkammern mit einem Durchmesser bis zu 3 mm ist möglich.

In Figur 4 ist eine Ansicht und in Figur 5 eine Aufsicht auf die Buchse 21 zur Lagerung des Stellhebels 3 dargestellt. Die Buchse 21 ist um die Achse 42 schwenkbar. Die konische Lagerfläche 29 hat einen Winkel a von 40 Winkelgraden zur senkrecht zur Achse 42 verlaufenden Stirnseite 31 und hat keine Fettkammem. Der Konuswinkel β beträgt damit 100 Winkelgrade. Mit einem Flansch 38 liegt die Buchse 21 auf der Abdeckscheibe auf. Gegenüberliegende Segmente 39 und 40 des Flansches 38 begrenzen den Schwenkweg der Buchse an den Anschlägen 35 des Gehäuses 2. Auf der Unterseite 41 des Flansches 38 sind, wie hier nicht zu sehen, ebenfalls Fettkammern vorgesehen, um die Reibung zwischen Buchse und Abdeckscheibe herabzusetzen.

In Figur 5 ist in der Aufsicht das Schwenklager 20 zu sehen, in das der Stellhebel von unten gesehen eingeschoben wird. Zur Herabsetzung der Reibung zwischen Schwenkhebel und Buchse können entweder auf den Lagerflächen der Buchse oder auf den Lagerflächen des Schwenkhebels ebenfalls Fettkammern zur Schmierung vorgesehen sein, wie hier nicht dargestellt ist.

## Patentansprüche

1. Kartusche (1) einer Sanitärarmatur mit einem Gehäuse (21), wobei das Gehäuse (2) der Kartusche (1), das von einer Bodenplatte (4) verschlossen wird, umschließt: eine Ventilsitzscheibe (8) mit Einlassöffnungen (9, 10) für Kalt- und Heißwasser und eine Ausströmöffnung (11), die in den Ausfluss der Sanitärarmatur mündet, eine zur Ventilsitzscheibe (8) verschiebbar angeordnete Steuerscheibe (12), die eine Mischkammer (23) enthält, die die Einlassöffnungen (9, 10) und die Ausströmöffnung (11) der Ventilsitzscheibe (8) in Verbindung bringt und in der die Mischung des heißen mit dem kalten Wasser erfolgt, sowie eine Abdeckscheibe (15), die auf der der Ventilsitzscheibe (8) abgewandten Seite der Steuerscheibe (12) mit dieser verbunden ist und mit einem Stellhebel (3) zum Verschieben der Scheiben in Wirkverbindung steht, der in einer von dem Gehäuse (2) umschlossenen Buchse (21) gelagert ist und mit dem Betätigungshebel der Armatur bewegt wird, **dadurch gekennzeichnet, dass** die Buchse (21) mit dem in ihr gelagerten Stellhebel (3) mit einer konisch geformten Fläche (29) auf einem ebenfalls konisch geformten Teil (30) der Stirnwand (31) des zylindrisch geformten Gehäuses (2) um eine durch das Gehäuse (2) verlaufende Achse (42) drehbar gelagert ist.

2. Kartusche nach Anspruch 1, **dadurch gekennzeichnet, dass** der Konuswinkel (β) der Konizität der Lagerfläche (29) der Buchse (21) sowie der Lagerfläche (30) des Gehäuses (2) zwischen 80 und 120 Winkelgraden liegt.

3. Kartusche nach Anspruch 2, **dadurch gekennzeichnet, dass** der Konuswinkel (β) 90 Winkelgrade beträgt.

4. Kartusche nach einem der Ansprüche 1 bis 3, **dadurch gekennzeichnet, dass** zur Herabsetzung der Reibung zwischen den Lagerflächen (29,30) auf der Lagerfläche (30) des Gehäuses (2) mindestens eine Fettkammer (37) vorgesehen ist.

5. Kartusche nach einem der Ansprüche 1 bis 3, **dadurch gekennzeichnet, dass** zur Herabsetzung der Reibung zwischen den Lagerflächen auf der Lagerfläche (29) der Buchse (21) mindestens eine Fettkammer vorgesehen ist.

## Claims

1. A cartridge (1) of a sanitary fitting having a housing (21), wherein the housing (2) of the cartridge (1), which is closed by a base plate (4), encloses: a valve-seat disc (8) with inlet openings (9, 10) for cold and hot water and a discharge opening (11) which runs into the outflow of the sanitary fitting, a control disc (12) which is arranged so that it is displaceable with respect to the valve-seat disc (8) and contains a mixing chamber (23) that connects the inlet openings (9, 10) and the discharge opening (11) of the valve-seat disc (8) and in which the hot water is mixed with the cold water, and also a cover disc (15) which is connected to the control disc (12) on the side thereof that is remote from the valve-seat disc (8) and is effectively connected to a control lever (3) for displacing the discs, the control lever being mounted in a bushing (21) enclosed by the housing (2) and moved with the actuating lever of the fitting, **characterised in that** the bushing (21) with the control lever (3) mounted in it is rotatably mounted about an axis (42) extending through the housing (2) with a conically shaped face (29) on a likewise conically shaped portion (30) of the front wall (31) of the cylindrically shaped housing (2).

2. A cartridge according to claim 1, **characterised in that** the cone angle (β) of the conical form of the bearing face (29) of the bushing (21) and also of the bearing face (30) of the housing (2) lies between 80 and 120 angular degrees.

3. A cartridge according to claim 2, **characterised in that** the cone angle (β) amounts to 90 angular degrees.

4. A cartridge according to one of claims 1 to 3, **characterised in that** in order to reduce the friction between the bearing faces (29, 30) at least one grease chamber (37) is provided on the bearing face (30) of the housing (2).

5. A cartridge according to one of claims 1 to 3, **characterised in that** in order to reduce the friction between the bearing faces at least one grease chamber is provided on the bearing face (29) of the bushing (21).

## Revendications

1. Cartouche (1) d'un appareil de robinetterie sanitaire, comprenant un boîtier (2), le boîtier (2) de la cartouche (1), qui est fermé par une plaque de base (4), comprenant : un disque de siège de soupape (8) comportant des orifices d'admission (9, 10) pour l'eau froide et l'eau chaude, et un orifice d'évacuation (11) qui débouche dans la sortie de l'appareil de robinetterie sanitaire; un disque de commande (12) qui est disposé avec possibilité de déplacement par rapport au disque de siège de soupape (8) et contient une chambre de mélange (23) qui met en communication les orifices d'admission (9, 10) et l'orifice d'évacuation (11) du disque de siège de soupape (8), et dans laquelle a lieu le mélange de l'eau chaude avec l'eau froide; ainsi qu'un disque de couverture (15) qui est relié au disque de commande (12), sur le côté éloigné du disque de siège de soupape (8), et est en liaison active avec un levier de manoeuvre (3) qui est destiné à déplacer les disques, est monté dans une douille (21) entourée par le boîtier (2) et peut être déplacé par la manette d'actionnement de l'appareil de robinetterie, **caractérisée en ce que** la douille (21), avec le levier de manoeuvre (3) qui y est monté, est en appui, avec une surface (29) de forme conique, sur une portion (30), également de forme conique, de la face frontale (31) du boîtier (2) conformé en cylindre, avec possibilité de rotation autour d'un axe (42) traversant le boîtier (2).

2. Cartouche selon la revendication 1, **caractérisée en ce que** l'angle (β) de la conicité de la surface d'appui (29) de la douille 21, ainsi que de la surface d'appui (30) du boîtier (2), est compris entre 80 et 120 degrés.

3. Cartouche selon la revendication 2, **caractérisée en ce que** l'angle (β) est de 90 degrés.

4. Cartouche selon une des revendications 1 à 3, **caractérisée en ce que**, pour diminuer le frottement entre les surfaces d'appui (29, 30), il est prévu au moins une chambre de graissage (37) sur la surface d'appui (30) du boîtier (2).

5. Cartouche selon une des revendications 1 à 3, **caractérisée en ce que**, pour diminuer le frottement entre les surfaces d'appui, au moins une chambre de graissage est prévue sur la surface d'appui (2).
